Europäisches Patentamt

European Patent Office

Office européen des brevets

(19)

(11) Veröffentlichungsnummer: **0 015 325**
**B1**

(12) **EUROPÄISCHE PATENTSCHRIFT**

(45) Veröffentlichungstag der Patentschrift: **15.12.82**

(21) Anmeldenummer: **79200735.3**

(22) Anmeldetag: **07.12.79**

(51) Int. Cl.³: **A 01 C 23/00, A 01 M 7/00**

(54) Verfahren und Vorrichtung zum pflanzenschonenden Ausbringen von Flüssigkeiten auf Bestände landwirtschaftlicher Kulturen.

(30) Priorität: **13.12.78 DE 2853733**

(43) Veröffentlichungstag der Anmeldung:
**17.09.80 Patentblatt 80/19**

(45) Bekanntmachung des Hinweises auf die Patenterteilung:
**15.12.82 Patentblatt 82/50**

(84) Benannte Vertragsstaaten:
**BE CH DE FR GB IT LU NL SE**

(56) Entgegenhaltungen:
**keine**

(73) Patentinhaber: **RUHR-STICKSTOFF
AKTIENGESELLSCHAFT
Königsallee 21
D-4630 Bochum 1 (DE)**

(72) Erfinder: **Norden, Jürgen
Samborner Strasse 97
D-4630 Bochum (DE)**
Erfinder: **Ucinhazska, Bruno
Johannesstrasse 6
D-4408 Dülmen (DE)**

(74) Vertreter: **Steil, Hanna, Dipl.-Chem. et al,
RSP PATENTE-PB 40 Holsterhauser Strasse 160
Postfach 2840
D-4690 Herne 2 (DE)**

Courier Press, Leamington Spa, England.

**0 015 325**

Verfahren und Vorrichtung zum pflanzenschonenden Ausbringen von Flüssigkeiten auf
Bestände landwirtschaftlicher Kulturen

Beschreibung und Beispiele

Die Erfindung betrifft ein Verfahren zum pflanzenschonenden Ausbringen von Flüssigkeiten auf Bestände landwirtschaftlicher Kulturen mit Hilfe fahrbarer Feldspritzgeräte durch den Einsatz von Schleppschläuchen an Verteiler-Elementen, die an die üblichen Stutzen dieser Geräte angebracht werden.

Im allgemeinen werden in der Landwirtschaft die Düngungs- und Pflanzenschutzmaßnahmen nicht nur vor, gleichzeitig oder kurz nach dem Ausbringen der Saat, sondern auch noch während fortgeschrittener Stadien der Vegetation vorgenommen. Besonders wichtig sind Nachdüngungen zu Getreide und Raps.

Zur Durchführung dieser Maßnahmen ist es erforderlich, mit Feldspritzgeräten durch die Bestände zu fahren und dabei die geeigneten Flüssigkeiten, insbesondere Pflanzenschutzmittel und flüssige Düngemittel auszubringen. Die zuzuführenden Flüssigkeiten dienen also zur Sicherung der Qualität der Erträge und zur mengenmäßigen Steigerung der Erträge.

Die Flüssigkeiten müssen so verteilt werden, daß weder Überkonzentrationen vorkommen, noch stellenweise eine Unterversorgung auftritt, noch die besonders empfindlichen Teile der Pflanzen gefährdet werden.

Die Pflanzen sind je nach Wuchshöhe bzw. Entwicklungstadium und Art an jeweils spezifischen Stellen besonders empfindlich gegenüber den Aktiv-Flüssigkeiten, z.B. an den Fahnenblättern und Fruchtansätzen bei Getreide und Gräsern oder an den Laubblättern bei Raps.

An anderen Stellen verhalten sich die Pflanzen indifferent, und es liegen auch Beobachtungen vor, daß leichte Anätzungen sogar wachstums-stimulierend wirken.

Aus diesen Gegebenheiten ergibt sich die Notwendigkeit, die Flüssigkeiten auf derartige Bestände in einer Weise auszubringen, daß die für die Ertragsbildung wichtigen Organe nicht getroffen werden.

Bekannt ist, daß beispielsweise der aus flüssigem Dünger bestehende Spritzstrahl dann geringe Verätzungen an der Pflanze verursacht, wenn er sie mit geringer Aufprallenergie, also schonend trifft.

Ebenso ist nicht neu, daß geringere Verätzungen dann auftreten, wenn man den flüssigen Dünger in Form gröberer Tropfen verteilt Hat das aus den Düsen austretende Tropfenspektrum dagegen seinen Schwerpunkt bei feineren Tropfen, dann wird meistens eine deutlich bessere Benetzung erreicht. Im Falle der Düngung mit flüssigem Dünger sind dann stärkere Pflanzenschädigungen zu beobachten. Zur Verteilung gröberer Tropfen wurde das sog. Tropfrohr entwickelt, das als Anbaugerät an die üblichen Spritzgestänge mit Stutzen im Halbmeterabstand und mit Gesamtlängen von 10 bis 20 m angesetzt wird. Gewöhnlich besitzen diese Tropfrohre 8 Bohrungen auf je 50 cm, d.h. die Tropfenbahnen verlaufen im Abstand von 6,25 cm.

Der Nachteil dieser Geräte ergibt sich aus der Umständlichkeit der Handhabung: Außerdem kommt es relativ häufig vor, daß Tropfrohre abbrechen; das trifft für die äußeren Rohre besonders dann zu, wenn Gestängeschwankungen auftreten, z.B. beim Kurven- oder Kehrenfahren oder in unebenem Gelände.

Naheliegend ist, daß die Schädigungen geringer ausfallen, wenn man die Wirkstoffe in größerer Verdünnung einsetzt. In dem folgenden Beispiel wurde eine Verdünnung von 1:2,6 angewandt.

Der Abspritzwinkel aus den Verteilerorganen beeinflußt die Lokalisierung der Hauptmenge der auftretenden Flüssigkeit in bestimmten Zonen an den Pflanzen. Anwendungen flüssigen Düngers mittels Verteilerorganen, die dem Spritzstrahl zunächst eine waagerechte Flugbahn vermitteln, lösen höhere Verätzungen an den Pflanzen aus als bei senkrechten Ausstoß.

Unter Berücksichtigung dieser Überlegung wurden Flachstrahldüsen entwickelt, z.B. die Düse 150/03 und die Düse 110/10. Dabei bedeuten 150 bzw. 110 die Spritzwinkel in Winkelgraden, während die Ziffern hinter dem Schrägstrich Herstellerangaben bezüglich der Durchflußmenge enthalten.

Infolge der Merkmale ergibt sich bei der Flachstrahldüse 150/03 ein feintropfiges Tropfenspektrum, während bei der Düse 110/10 der Schwerpunkt der Tropfengröße bei gröberen Tropfen liegt.

Einen nahezu waagerechten Austritt des Flüssigkeitsstrahls liefert die FloodJet-Düse. Bei ihr trifft die Flüssigkeit aus einer senkrechten Bohrung auf einen Verteilerteller. Die erhoffte Verbesserung wird bei dieser Düse jedoch dadurch beeinträchtigt, daß sich die Hauptmenge der zu verteilenden Flüssigkeit auf dem Blätterdach der Bestände ablagert. Dadurch treten Schädigungen ein. Die weniger empfindlichen Teile der Pflanzen und die Pflanzenteile, bei denen eine Schädigung unter Umständen für den Ertrag und die Qualität nützlich wäre, werden bei der FloodJet-Düse jedoch kaum getroffen.

In der folgenden Tabelle sind die besprochenen Düsensystem bei einem Einsatz von 60 kg N/ha in Form von Ammonnitrat-Harnstoff-Lösung (AHL) bei der Winterweizenspätdügung (Sorten Diplomat, Disponent, Maris Huntsman and Vuka) mit der entsprechenden Anwendung von Kalkammonsalpeter (KAS) vor der Saat verglichen. Es wurde sowohl eine Bonitierung (mit den Noten 1=sehr gut bis 9=sehr schlecht) durchgeführt, als auch die Erträge ermittelt. Diese wurden als Relativzahlen in Bezug auf den KAS-Ertrag=100 angegeben.

**0 015 325**

TABELLE 1

| Prüfglied Nr. Typ | | Bonituren | Erträge % |
|---|---|---|---|
| 1 | KAS | 1,0 | 100 |
| 2 | Tropfrohr (unverd.) | 1,0 | 93 |
| 3 | Tropfrohr (verd. 1:2,6) | 1,0 | 99 |
| 4 | Flachstrahldüse 150/03 | 2,5 | 95 |
| 5 | Flachstrahldüse 110/10 | 1,0 | 100 |
| 6 | FloodJet | 3,5 | 94 |

Es zeigt sich, daß Verätzungstiefe und Ertragsdepressionen nicht parallel zueinander verlaufen. So liefert die FloodJet-Düse (6) trotz ziemlich starker Verätzungen höhere Erträge als das Tropfrohr bei unverdünnter Anwendung der AH-Lösung (2). Andererseits sind Ertragsschädigungen auch zu beobachten, wenn praktisch keine Verätzungen festzustellen waren (vergl. Versuchsglied 2).

Es wurde nun gefunden, daß man Pflanzenschutzmittel und/oder flüssigen Dünger praktisch ohne Beeinträchtigung der Erträge auf Bestände landwirtschaftlicher Kulturen ausbringen kann, wenn man die Verteilung mit Hilfe von Feldspritzgeräten in Verbindung mit mit Dosiereinrichtungen versehenen Verteiler-Elementen und Schleppschläuchen durchführt.

Wie bereits erwähnt, sind die Stutzen bei den fahrbaren Feldspritzgeräten üblicherweise im Abstand von 50 cm angebracht (in Frankreich in 37 cm). Beim Einsatz von Schleppschläuchen in diesem Abstand würden die Bestände streifenweise unterversorgt bleiben. Man sollte daher so viele Schleppschläuche verwenden, daß der Abstand nur 25 cm bzw. 16,67 cm bzw. 12,5 cm oder 10 cm (von Mitte zu Mitte gemessen) beträgt.

Zur Verbindung zwischen den Schleppschläuchen und den Stutzen der Feldspritzgeräte sind mit Dosiereinrichtungen versehene Verteiler-Elemente erforderlich. Für diesen Zweck kommen T- oder Y- oder X-Rohrstücke oder auch—falls eine noch vielfältigere Verteilung gewünscht wird—spinnen- oder rechenartige Rohrstücke in Frage.

Diese Rohrstücke können aus allen Materialien hergestellt werden, die gegen die üblicherweise verwendeten Flüssigdünger und Pflanzenschutzmittel korrosionsbeständig sind, insbesondere aus Kunststoffen und Chrom-Nickelstählen.

Die Verbindung dieser Verteiler-Elemente mit den Stutzen des Spritzgestänges kann je nach den Materialien des Stutzens und des Verteiler-Elementes durch Schweißen, Verschrauben, durch konusartige Schliffstücke mit zusätzlichen Haltevorrichtungen, durch Muffen oder durch Überwurfmuttern, durch Schlauchstücke mit Rohrschellen oder auf sonstige Weise erfolgen.

Für die Verbindungen der Auslaufstutzen der Verteiler-Elemente mit den Schleppschläuchen kommen vorzugsweise Schlauchtüllen-Ansatzstücke und Rohrschellen infrage. Für die Zu- und Abläufe der Verteiler-Elemente sind auf diese Weise sowohl gleiche wie auch verschiedene Anschlußarten möglich.

Zur Aufrechterhaltung gleichmäßiger Abstände zwischen den Schleppschläuchen ist die Verwendung zusätzlicher Stabilisatoren erforderlich. Dazu benutzt man gewöhnlich Stahldrähte, die durch die Führung innerhalb oder vorzugsweise außerhalb der Schläuche diese in der jeweils gewünschten Distanz halten. In entsprechender Weise sind auch Abstandshalter aus bei maximal vorkommenden Außentemperaturen nicht biegbaren Kunststoffen einsetzbar.

Je nach der Zahl der Verteilerstellen, der Form der Verteiler-Elemente und der Oberflächenbeschaffenheit des zu versorgenden Feldes wird man die Dosiervorrichtungen entweder vor der Verteilungsstelle oder vor jedem einzelnen Auslauf vorsehen. Zur Dosierung verwendbar sind die bekannten Vorrichtungen für diesen Zweck, wie Ventile, Hähne, Klemmvorrichtungen, Düsen, usw. Beim Einsatz von Flüssigdüngern haben sich Kaliberscheiben besonders gut bewährt, weil die Durchflußmengen in diesem Fall relativ groß bleiben, so daß es nicht zu Verstopfungen kommt.

Das überlicherweise in den Anschlußstücken der fahrbaren Gestänge eingebaute Kugelventilfilter darf auf keinen Fall ausgebaut werden. Falls keins vorhanden sein sollte, ist es am besten in dem Zulaufstutzen des Verteiler-Elementes anzubringen, da es sonst häufig zu Verstopfungen käme.

Auf jeden Fall hat man durch das Verteiler-Element den Vorteil, daß man dieses notwendige Filter nur einmal für zwei, drei oder vier bzw. fünf Verterilerstellen beschaffen muß.

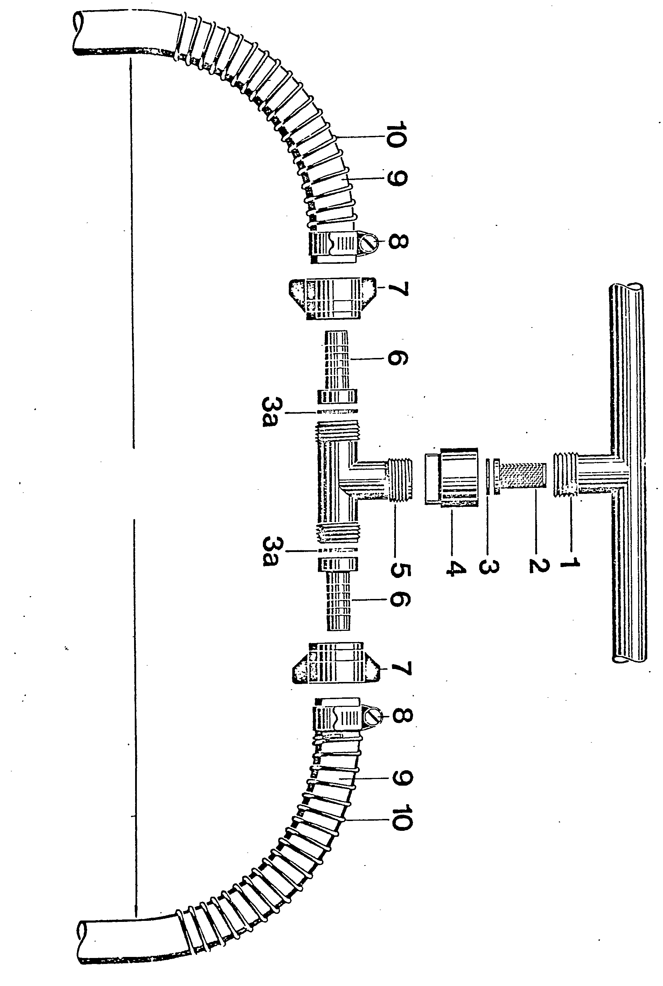

In der beigefügten Zeichnung ist eine erfindungsgemäße Vorrichtung für den Fall der Verwendung von zwei Schleppschläuchen je Anschlußstutzen des Feldspritzgerätes dargestellt.

Die Figur zeigt einen Abschnitt des Spritzbalkens mit einem Anschlußstutzen (1). (2) stellt die in den Stutzen eingepaßte Filtervorrichtung dar, in der sich eine frei bewegliche Kugel befindet. Die Muffe (4) ist sowohl an den Anschlußstutzen des Spritzgerätes als auch an das Zulaufende des Verteiler-Elements (5) anzuschrauben. Die Tüllen (6) werden durch Überwurfmuttern (7) am Verteiler-Element festgeschraubt. Über die freien Enden der Tüllen wird der Schlauch (9) geschoben und mit Schlauch-

3

schellen (8) gesichert. Der Stahldraht (10) ist so angebracht, daß (die hier nicht mehr gezeichneten) freien Schlauchenden in dem jeweils gewünschten konstanten Abstand verharren.

Die zur Dosierung verwendeten Kaliberscheiben werden entweder zwischen das Kugelventilfilter (2) und die Muffe (4) eingesetzt (3) oder im Alternativfall (3a) zwischen die Auslaufstutzen des Verteiler-Elements (5) und die Schlauchtülle (6). Eine gleichzeitige Anwendung von Dosierscheiben vor und hinter dem Verteiler-Element (5) dürfte nur in Ausnahmefällen, z.B. bei sehr unebenem Gelände, zu empfehlen sein. Im allgemeinen wird die Anordnung der Dosiereinrichtung im Zulauf zur Verteiler-Düse bereits eine ausreichend gleichmäßige Verteilung erzielen lassen.

Anstelle der in diesem Beispiel gewählten Verbindungsstücke zwischen den Stutzen des Feldspritzgerätes und dem Verteiler-Element sowie den Auslaufenden des Verteiler-Elements und dem angeschlossenen Schlauch lassen sich die oben besprochenen Äquivalente einsetzen. Dasselbe gilt für die Dosiervorrichtungen (3) bzw. (3a) und die Abstandshalter (10) und vor allem für die Form des Verteiler-Elements (5).

Bei der Verwendung von Schleppschläuchen in Verbindung mit diesen Verteiler-Elementen ergab sich völlig überraschenderweise, daß beispielsweise beim Einsatz von AHL die empfindlichen Pflanzenteile nicht beeinträchtigt werden. Die Flüssigkeit gelangt, ohne irgendwelche Verätzungen zu bewirken, direkt auf bzw. in den Boden, bzw. verätzte die Pflanzen höchstens in Bereichen, in denen ein solches Auftreffen keine Ertragsschädigung mehr bewirkt. Die Düngerwirkung der zugeführten Nährstofflösung konnte also voll genutzt werden, so daß die Düngerwirkung von KAS nicht nur erreicht, sondern in einigen Fällen sogar übertroffen wurde. Bei einer derartigen Bandablage im Abstand von beispielsweise 25 cm und dementsprechend hoher lokaler Konzentration traten selbst bei Verdoppelung der sinnvoll einzusetzenden Düngemenge keine Schäden auf. Das zeigt sich beispielsweise aus den Ergebnissen der Nachdüngung von Raps und Weidelgras mit Ammonnitratharnstofflösung gegenüber ungedüngten Proben (Tabelle 2).

TABELLE 2

| Applikations-<br>variante | kg/ha<br>N | Raps | Weidelgras |
|---|---|---|---|
| | | Bonitierung* | |
| ohne Dünger | | 1,00±0 | 1,00±0 |
| Flachstrahldüse | 40 | 3,50±0 | 5,75±0,75 |
| unverd. | 70 | 5,00±0 | 6,25±0,75 |
| | 100 | 7,00±0 | 7,00±0,50 |
| | 140 | 7,50±0,5 | 7,75±0,25 |
| Flachstrahldüse | 40 | 4,75±0,25 | 6,00±0 |
| 1:3 verdünnt | 60 | 5,50±0 | 7,00±0 |
| Schleppschlauch | 40 | 1,50±0,50 | 2,75±0,25 |
| unverd. | 70 | 1,50±0,50 | 3,00±0 |
| | 100 | 1,50±0,50 | 3,25±0,25 |
| | 140 | 1,50±0,50 | 3,50±0,50 |

*Bonitierung als Mittelwert von zwei Prüfern

Das erfindungsgemäße Verfahren ist dem bewährten Verfahren mit Kalkammonsalpeter mindestens gleichwertig. Das zeigt sich zum Beispiel an den Durchschnittserträgen von Winterweizen (von 6 Standorten) bei Anwendung von KAS und AHL in Mengen von 60 kg N/ha bei verschiedenen Ausbringungstechniken (Tabelle 3).

TABELLE 3

| Prüfglieder | | Erträge | |
|---|---|---|---|
| Nr. Art | | dt/ha | in v.H. |
| 1 | ohne Dünger | 63,5 | 100 |
| 2 | KAS | 71,4 | 112 |
| 3 | Tropfrohr | 67,5 | 107 |
| 4 | Flachdüse 110/06/08 | 67,4 | 107 |
| 5 | Schleppschlauch | 71,1 | 112 |

Auf diese Weise ergibt sich die Möglichkeit, den vorteilhaften Flüssigdünger jetzt auch in beliebiger Menge unabhängig von dem sonst die Anwendung einschränkenden vegetativem Stadium der Pflanzen oder bei Witterungsverhältnissen, die gewöhnlich die Anwendung behindern, risikolos ohne komplizierte Anwendungsempfehlungen einzusetzen.

**0015325**

Völlig unerwartet ergab sich auch, daß die bekannten Spritzgestänge in Verbindung mit mit Düsen versehenen Verteiler-Elementen und Schleppschläuchen ohne technische Anwendungsschwierigkeiten selbst in hohem und dichtem Pflanzenbestand störungsfrei einsetzbar sind. Das gilt auch für Einsätze der Feldspritzgeräte mit Pflanzenschutzmitteln.

Unbekannt war auch, daß dieses Verfahren nicht nur im fortgeschrittenen vegetativem Stadium Vorteile bietet, sondern auch vor oder zu Beginn der Vegetation bei Anwendung flüssigen Düngers zu Getreide oder Raps vorteilhaft einsetzbar ist. Bei der Raps-Frühjahrsdüngung war zu beobachten, daß Verätzungen, wenn überhaupt, unerwartet schwach auftraten. Sie lagen im allgemeinen im Düngungsband niedriger als bei gleichmäßig benetzenden Spritztechniken. Damit bietet dieses Verfahren auch die risikolose Anwendung flüssigen Düngers zu Raps. Das erfindungsgemäße Verfahren schließt mit seinen Vorzügen die bisher bestehende Anwendungslücke des Flüssigdüngersystems, nämlich die Getreidespätdüngung und die Rapsdüngung im Frühjahr. Die bisher bei Anwendung von Flüssigkeiten für Bestände zu befürchtenden Schäden und Ertragseinbußen sind künftig kein Hindernis mehr für die generelle Anwendung der fahrbaren Feldspritzgeräte bzw. des Aufbringens von Pflanzenschutzmitteln und/oder von Flüssigdüngern auf Bestände von landwirtschaftlichen Kulturen wie Getreide, Gräser und Raps.

**Patentansprüche**

1. Verfahren zum pflanzenschonenden Ausbringen von Flüssigkeiten auf Bestände landwirtschaftlicher Kulturen, dadurch gekennzeichnet, daß man die Verteilung mit Hilfe von Feldspritzgeräten in Verbindung mit mit Dosiereinrichtungen (3) vesehenen Verteiler-Elementen (5) und Schleppschläuchen durchführt.

2. Verfahren nach Anspruch 1, dadurch gekennzeichnet, daß die zu verteilende Flüssigkeit ein Pflanzenschutzmittel ist.

3. Verfahren nach Anspruch 1, dadurch gekennzeichnet, daß die zu verteilende Flüssigkeit ein flüssiges Düngemittel ist.

4. Verfahren nach Anspruch 1 und 3, dadurch gekennzeichnet, daß das zu verteilende flüssige Düngemittel Ammonnitrat-Harnstoff-Lösung (AHL) ist.

5. Verfahren nach einem oder mehreren der Ansprüche 1—4, dadurch gekennzeichnet, daß landwirtschaftliche Getreidekulturen behandelt werden.

6. Verfahren nach einem oder mehreren der Ansprüche 1—4, dadurch gekennzeichnet, daß das Verfahren in der Weidewirtschaft angewendet wird.

7. Verfahren nach einem oder mehreren der Ansprüche 1—4, dadurch gekennzeichnet, daß Rapskulturen behandelt werden.

8. Verfahren nach einem der Ansprüche 1—7, dadurch gekennzeichnet, daß man als Dosiereinrichtung des Verteiler-Elementes (5) Kaliberscheiben (3) verwendet.

9. Verfahren nach einem der Ansprüche 1—8, dadurch gekennzeichnet, daß man die Dosiereinrichtung (3) jeweils in dem Anschlußende des Verteiler-Elementes (5) an die Zulaufstutzen (1) des fahrbaren Feldspritzgerätes anordnet.

10. Verfahren nach einem der Ansprüche 1—8, dadurch gekennzeichnet, daß man die Dosiereinrichtung (3a) jeweils hinter den Ausflußenden des Verteiler-Elementes (5) in die Schleppschläuche anordnet.

11. Vorrichtung zum pflanzenschonenden Ausbringen von Flüssigkeiten auf Bestände landwirtschaftlicher Kulturen nach einem oder mehreren der Ansprüche 1—10, gekennzeichnet durch ein mit einer oder mehreren Dosiereinrichtungen versehenes Verteiler-Element (5), das aus einem mit den Stutzen (1) des Feldspritzgerätes zu verbindenden Zuführungsrohrstück und damit verbundenen zwei oder mehreren Ableitungsrohrstücken besteht, an die die Schleppschläuche, gegebenenfalls in Verbindung mit entsprechenden Abstandshaltern (10), anschließbar sind.

**Revendications**

1. Procédé pour épandre des liquides sur des peuplements de cultures agricoles, tout en ménageant les plantes, caractérisé en ce que la distribution est effectuée à l'aide de pulvérisateurs pour cultures, en combinaison avec des éléments répartiteurs (5) pourvus de doseurs (3) et des boyaux traînés.

2. Procédé suivant le revendication 1, caractérisé en ce que le liquid à distribuer est un pesticide.

3. Procédé suivant la revendication 1, caractérisé en ce que le liquide distribué est un engrais liquide.

4. Procédé suivant les revendications 1 et 3, caractérisé en ce que l'engrais liquide à distribuer est une solution d'ammonitrate-urée.

5. Procédé suivant une ou plusieurs revendications 1 à 4, caractérisé par le traitement de cultures agricoles de blé.

6. Procédé suivant une ou plusieurs revendications de 1 à 4, caractérisé en ce que le procédé est appliqué à l'exploitation des pâturages.

7. Procédé suivant une ou plusieurs revendications de 1 à 4, caractérisé en ce qu'il est appliqué au traitement de cultures de colza.

8. Procédé suivant une quelconque des revendications 1 à 7, caractérisé en ce que des disques calibrés (3) servent de dispositifs doseurs de l'élément répartiteur (5).

9. Procédé suivant une quelconque des revendications 1 à 8, caractérisé en ce que le dispositif doseur (3) est disposé dans l'extrémité de raccordement de chaque élément répartiteur (5) à la tubulure d'admission (1) du pulvérisateur mobile pour cultures.

10. Procédé suivant une quelconque des revendications 1 à 8, caractérisé en ce que le dispositif doseur (3a) est disposé derrière chacune des extrémités de sortie de l'élément répartiteur (5) vers les boyaux traînés.

11. Dispositif pour épandre des liquides sur des peuplements de cultures agricoles, tout en ménageant les plantes, suivant une quelconque ou plusieurs revendications 1 à 10, caractérisé par un élément répartiteur (5) pourvu d'un ou de plusieurs dispositifs doseurs et constitué par un tronçon tubulaire d'admission appelé à être réuni à la tubulure (1) du pulvérisateur pour cultures et par deux ou plusieurs tronçons tubulaires de dérivation réunis à cette tubulure et auxquels se raccordent les boyaux traînés, éventuellement en combinaison avec des espaceurs (10) appropriés.

## Claims

1. Method for plant-sparing distribution of liquids on agricultural crops characterized in that the distribution is performed by means of field spray apparatuses in connection with distributor elements (5) and drag hoses (3) equipped with metering devices (3).

2. Method according to Claim 1, characterized in that said liquid is a plant protection liquid.

3. Method according to Claim 1, characterized in that said liquid is a liquid for fertilizer.

4. Method according to Claims 1 and 3, characterized in that said liquid fertilizer is an ammonium nitrate solution plus urea.

5. Method according to one or several of Claims 1 to 4, characterized in that agricultural grain crops are treated.

6. Method according to one or several of Claims 1 to 4, characterized in that this method is applied to pasture plants.

7. Method according to one or several of Claims 1 to 4, characterized in that rape plants are treated.

9. Method according to one of Claims 1 to 8, characterized in that the metering device (3) is located at the connection between the distributor element (5) and each aperture (1) of the rod of the portable field spray apparatus.

10. Method according to one of Claims 1 to 8, characterized in that the metering device (3a) is located between each outlet of the distributor element (5) and the drag hoses.

11. Apparatus for plant-sparing distribution of liquids on agricultural crops according to one or several of Claims 1 to 10, consisting of a distributor element (5), connected to each of the apertures (1) of the rod of the field spray apparatus, and being equipped with one or several metering devices, the outlet pipes of said distributor elements (5) each being connected with drag hoses, optionally performed with suitable spacers (10) for maintaining equal distances therebetween.